# EUROPÄISCHE PATENTSCHRIFT

(11) **EP 3 821 288 B1**
(45) Veröffentlichungstag und Bekanntmachung des Hinweises auf die Patenterteilung: **02.04.2025**
(21) Anmeldenummer: 19745559.5
(22) Anmeldetag: 09.07.2019
(51) Int. Cl.: G02B 27/09, G02B 19/00, G02B 26/08, B23K 1/005, B23K 26/06, B23K 26/073, B23K 26/21, G02B 3/00, G02B 27/30

(54) **STRAHLFORMENDE LASEROPTIK**
BEAM SHAPING LASER OPTIC
OPTIQUE LASER FORMANT DES FAISCEAUX

(30) Priorität: 10.07.2018 DE 102018211409
(43) Veröffentlichungstag der Anmeldung: 19.05.2021
(73) Patentinhaber: Laserline GmbH, 56218 Mülheim Kärlich (DE)
(72) Erfinder: BAUMANN, Markus, 56218 Mülheim Kärlich (DE); LUFT, Axel, 56332 Dieblich (DE)
(74) Vertreter: Patentanwälte Hemmer Lindfeld Frese Partnerschaft mbB
(86) Internationale Anmeldenummer: PCT/DE2019/200073
(87) Internationale Veröffentlichungsnummer: WO 2020/011315

(56) Entgegenhaltungen:
- DE-A1- 102015 112 537
- US-A- 6 157 492
- US-A1- 2004 179 807
- US-A1- 2005 105 189

## Beschreibung

Die Erfindung betrifft eine strahlformende Laseroptik.

Derartige strahlformende Laseroptiken werden in Lasersystemen zur Materialbearbeitung eingesetzt, beispielsweise in Lasersystemen zum Schweißen oder Löten, um in einer Bearbeitungsebene einen oder mehrere Laserpunkte (Spots) in gewünschter Form zu erzeugen.

Beispielsweise aus DE 10 2015 112 537 A1 ist eine derartige Laseroptik bekannt. Die dort beschriebene Laseroptik verwendet zwei gekreuzt zueinander geordnete Felder von Zylinderlinsen, welche aus einem Teil des Laserstrahls einen im wesentlichen rechteckigen Laserpunkt bzw. Laserspot formen. Ein zweiter Teil des Laserstrahls wird durch ein Keilelement in zwei runde Punkte bzw. Spots aufgeteilt. Durch Verlagerung der optischen Einheit, welche aus den Linsenfeldern und den Keilelementen gebildet wird, kann eine Leistungsaufteilung zwischen den einzelnen Laserpunkten verändert werden. Die Lage der Laserpunkte zueinander bleibt dabei jedoch stets gleich.

US 6,157,492 A offenbart eine Laseroptik, welche im Strahleingang hintereinanderliegende Zylinderlinsenanordnungen aufweist, wobei sich die Längsachsen der Zylinderlinsen zweier hintereinanderliegender Linsenanordnungen kreuzen. Durch die Linsenanordnung wird ein Laserstrahl in eine Vielzahl paralleler Strahlen aufgesplittet, um eine verbesserte optische Korrektur zu erreichen. Eine entsprechende Anordnung ist auch aus US 2004/179807 A1 bekannt.

Um ein Lasersystem besser an verschiedene Einsatzszenarien anpassen zu können, kann es jedoch wünschenswert sein, auch die Lage mehrerer erzeugter Laserpunkte zueinander zu verändern.

Es ist Aufgabe der Erfindung, eine strahlformende Laseroptik bereitzustellen, welche es ermöglicht, aus einem Laserstrahl mehrere Laserpunkte zu erzeugen und auf vereinfachte Weise die Position der Laserpunkte zueinander zu verändern.

Diese Aufgabe wird durch eine strahlformende Laseroptik mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Die erfindungsgemäße strahlformende Laseroptik ist dazu vorgesehen, ausgangsseitig einer Laserlichtquelle angeordnet zu werden, um den austretenden Laserstrahl so zu formen, dass in einer Bearbeitungsebene Laserpunkte gewünschter Form und Lage erzeugt werden können. Die erfindungsgemäße Laseroptik weist ein Linsenfeld auf, welches eine Mehrzahl erster Linsen aufweist, die derart ausgebildet und nebeneinander angeordnet sind, dass sie eine Strahlformung in einer ersten Richtung normal zu einer optischen Achse bewirken. Die optische Achse ist dabei die Längsrichtung der Laseroptik parallel zu welcher, der Strahlengang durch die Laseroptik verläuft. Die Anordnung mehrerer Linsen in einem Linsenfeld hat den Vorteil, dass eine Verlagerung des Linsenfeldes die von dem Linsenfeld in der ersten Richtung bewirkte Strahlformung nicht verändert. Das heißt, die erzeugte Geometrie des Laserpunktes wird in dieser Richtung bei einer Verlagerung des Linsenfeldes quer zum Strahlengang bzw. zur optischen Achse nicht verändert. Erfindungsgemäß ist neben diesem Linsenfeld eine zweite Linse im vorgesehenen Strahlgang angeordnet, wobei es sich bei dieser zweiten Linse um eine einzelne Linse handelt. Diese Linse ist so angeordnet, dass sie eine Strahlformung in einer zweiten Richtung normal zu der genannten optischen Achse sowie normal zu der beschriebenen ersten Richtung bewirkt. Das heißt, das Linsenfeld und die zweite Linse bewirken gemeinsam eine Strahlformung in zwei Raumrichtungen, welche eine Ebene normal zu der genannten optischen Achse aufspannen. Somit kann ein Laserpunkt, welcher in einer Bearbeitungsebene erzeugt werden soll, in zwei Richtungen geformt werden. Beispielsweise kann ein rechteckiger und weiter bevorzugt quadratischer Laserpunkt durch eine solche Linsenanordnung erzeugt werden. Um dies zu erreichen, sind das Linsenfeld mit den ersten Linsen und die zweite Linse in dem gewünschten Strahlengang entlang der optischen Achse hintereinander angeordnet, wobei es möglich ist, das Linsenfeld mit den ersten Linsen im Strahlengang vor der zweiten Linse anzuordnen oder die zweite Linse im Strahlengang vor dem Linsenfeld anzuordnen. Auf jeden Fall durchläuft zumindest ein Teil der Laserstrahlung im Strahlengang sowohl das Linsenfeld als auch die zweite Linse, um die Formung des Laserstrahls in zwei Richtungen zu realisieren. Die Verwendung der Einzellinse als zweite Linse ermöglicht es, durch Verlagerung dieser Linse, den von dem Linsenfeld und der zweiten Linse erzeugten Laserpunkt in seiner Position zu verschieben.

Die beschriebenen ersten Linsen des Linsenfeldes sind vorzugsweise als Zylinderlinsen ausgebildet, welche weiter bevorzugt alle identisch ausgebildet sind. Auf diese Weise kann eine Strahlformung erreicht werden, welche sich auch bei Verlagerung des Linsenfeldes in zumindest einer der genannten Richtungen, insbesondere der ersten Richtung, nicht ändert. Anstelle eines Lindenfeldes mit identischen Zylinderlinsen können in dem Linsenfeld auch Zylinderlinsen mit unterschiedlichen Brennweiten eingesetzt werden mit dem Ziel, verschiedene Laserspots unterschiedlicher Größe zu erzeugen, welche einander überlagert werden. So kann eine gestufte Leistungsdichteverteilung erzeugt werden. Um die Leistungsdichteverteilung bei einer Verschiebung bzw. Verlagerung der Optikanordnung bzw. des Linsenfeldes möglichst unverändert zu erhalten, werden die Zylinderlinsen mit unterschiedlichen Brennweiten vorzugsweise symmetrisch zur Mitte der Anordnung verteilt. Es ist jedoch auch möglich, die Linsen so zu verteilen, dass eine Veränderung der Leistungsaufteilung zwischen den Laserspots unterschiedlicher Grö-ße bei Verschiebung der Optikanordnung erreicht wird. Dazu können die Zylinderlinsen unterschiedlicher Brennweiten in dem Linsenfeld in einzelne Bereiche zusammengefasst werden, sodass eine asymmetrische Ausgestaltung des Linsenfeldes geschaffen wird.

Die Längsachsen der Zylinderlinsen des Linsenfeldes erstrecken sich vorzugsweise parallel zueinander und weiter bevorzugt parallel zu der zweiten Richtung und normal zu der optischen Achse. Die Längsachsen sind dabei diejenigen Achsen, um die die Linsen gekrümmt sind.

Unter Zylinderlinsen im Sinne dieser Erfindung sind Linsen zu verstehen, welche über ihre Längserstreckung vorzugsweise einen konstanten Querschnitt und zumindest eine, bevorzugt konvex gekrümmte Außenseite haben. Derartige Zylinderlinsen müssen nicht als Kreiszylinder ausgebildet sein, sondern können vielmehr im Querschnitt beispielsweise auch die Form eines Kreisabschnittes oder Kreissegmentes oder ähnliche Form aufweisen.

Weiter bevorzugt ist die zweite Linse als Zylinderlinse ausgebildet, wobei sich die Längsachse bevorzugt in der ersten Richtung oder parallel zu der ersten Richtung und normal zu der optischen Achse erstreckt. Das heißt, die Längsachse der zweiten Linse erstreckt sich bevorzugt normal zu den Längsachsen der Zylinderlinsen, welche bevorzugt die ersten Linsen in dem Linsenfeld bilden. Durch diese gekreuzte Anordnung der Erstreckungsrichtungen der Zylinderlinsen wird erreicht, dass die zweite Linse eine Strahlformung in einer Richtung quer bzw. rechtwinklig zu der Richtung bewirkt, in welcher das Linsenfeld mit den ersten Linsen eine Strahlformung bewirkt.

Weiter bevorzugt weist die zweite Linse in der ersten Richtung eine Ausdehnung auf, welche zumindest der Ausdehnung des Linsenfeldes in dieser Richtung entspricht. Alternativ oder zusätzlich kann die zweite Linse vorzugsweise auch in der zweiten Richtung eine Ausdehnung aufweisen, welche zumindest der Ausdehnung des Linsenfeldes in dieser zweiten Richtung entspricht. Dadurch wird erreicht, dass das Linsenfeld und die zweite Linse beide einen gemeinsamen identischen Querschnitt des Laserstrahls abdecken und diesen in gewünschter Weise in zwei Richtungen formen können.

Die zweite Linse ist zweckmäßigerweise als eine Streulinse ausgebildet, welche den Laserstrahl in der zweiten Richtung aufweitet. Eine solche Strahlaufweitung kann in dem kollimierten Strahl alternativ auch mit einer Sammellinse erreicht werden. Somit könnte die zweite Linse auch als Sammellinse ausgebildet sein. Die ersten Linsen des Linsenfeldes sind vorzugsweise so ausgebildet, dass sie den Laserstrahl in der ersten Richtung aufweiten. Auch dies kann alternativ mit Sammellinsen/ Streulinsen erfolgen. So kann das Linsenfeld den Laserstrahl beispielsweise in der ersten Richtung linienförmig aufweiten, wobei eine nachgeordnete zweite Linse diese Linie dann in derzweiten Richtung zu einem rechteckigen und weiter bevorzugt quadratischen Querschnitt aufweitet. Die zweite Linse kann vorzugsweise eine größere Brennweite als die ersten Linsen des Linsenfeldes aufweisen.

Gemäß der Erfindung ist im Strahlengang hinter dem Linsenfeld und der zweiten Linse zumindest eine Fokussierlinse angeordnet. Diese fokussiert den Laserstrahl in die Bearbeitungsebene, um dort die gewünschten Laserpunkte bzw. Laserspots zu erzeugen.

Gemäß einer weiteren bevorzugten Ausführungsform der Erfindung bilden das Linsenfeld und die zweite Linse eine optische Baugruppe, welche als Ganzes in der ersten und/oder in der zweiten Richtung normal zu der optischen Achse bewegbar ist. Durch die Bewegung dieser optischen Baugruppe wird es, wie weiter unten beschrieben wird, möglich, die Intensität und/oder die Lage der erzeugten Laserpunkte (Laserspots) zueinander zu verlagern. Hierzu kann die optische Baugruppe an einer Verstelleinrichtung befestigt sein, welche eine Bewegung bzw. Verlagerung in der ersten Richtung und/oder der zweiten Richtung ermöglicht. Die Verstelleinrichtung ist bevorzugt so ausgebildet, dass ein Verstellen in der ersten Richtung unabhängig von dem Verstellen in der zweiten Richtung möglich ist. Die Verstelleinrichtung kann eine rein mechanische Verstelleinrichtung sein, welche von Hand einstellbar ist. Es sind jedoch auch geeignete automatisierte Verstelleinrichtungen, insbesondere elektrisch angetriebene Verstelleinrichtungen verwendbar, um durch entsprechende Ansteuerung mittels einer Steuereinrichtung eine Einstellbarkeit und ggf. Regelung der erzeugten Laserpunkte zu erreichen.

Besonders bevorzugt ist die genannte optische Baugruppe relativ zu der beschriebenen Fokussierlinse in der ersten und/oder in der zweiten Richtung normal zu der optischen Achse bewegbar. Weiter bevorzugt ist die optische Baugruppe relativ zu einer Laserstrahlquelle und relativ zu der genannten optischen Baugruppe im Strahlengang vorgelagerten optischen Bauelementen bewegbar. Das heißt, bevorzugt stellt die genannte optische Baugruppe ein Bauteil dar, welches relativ zu den übrigen optischen Elementen im Strahlengang quer zur optischen Achse verlagerbar ist, während die übrigen optischen Bauelemente im Strahlengang ihre Lage zumindest in Richtung quer zur optischen Achse beibehalten.

Das Linsenfeld und die zweite Linse, das heißt, vorzugsweise die vorangehend beschriebene optische Baugruppe, sind im Strahlengang in einem Bereich kollimierter Strahlung angeordnet. Dazu ist der Anordnung aus Linsenfeld und zweiter Linse im Strahlengang zumindest eine Linse oder Linsengruppe vorgelagert, welche die Strahlung kollimiert, also eine Kollimatorlinse bildet, welche den Strahlengang aufweitet und einen im wesentlichen parallelen aufgeweiteten Strahlengang erzeugt. Die kollimierte Strahlung tritt durch die Anordnung aus Linsenfeld und zweiter Linse hindurch und wird in diesen dann in gewünschter Weise geformt, wobei, wie unten dargelegt, nur ein Teil der kollimierten Strahlung einer solchen Strahlformung unterzogen wird.

Gemäß der Erfindung sind das Linsenfeld und die zweite Linse in dem Strahlengang derart angeordnet, dass sie in einer Querrichtung normal zur optischen Achse und vorzugsweise in der oben beschriebenen ersten Richtung den Strahlengang nur teilweise überdecken. Die zweite Linse und das Linsenfeld überdecken dabei vorzugsweise einen identischen Querschnitt bzw. identischen Anteil des Strahlenganges, sodass dieser Anteil des Strahlenganges sowohl das Linsenfeld als auch die zweite Linse durchläuft, um die gewünschte Strahlformung zu erfahren. Ein weiterer Teil des Strahlenbündels verläuft neben dem Linsenfeld und der zweiten Linse seitlich, das heißt, tritt nicht durch diese hindurch, sodass dieser Teil des Strahlenganges nicht beeinflusst oder im Verlauf geändert wird. Dieser Teil des Strahlenganges führt über die vor- und nachgeschalteten optischen Bauelemente, insbesondere eine vorgeschaltete Kollimatorlinse und eine nachgeschaltete Fokussierlinse, in der Bearbeitungsebene bevorzugt zu einer Abbildung der Laserlichtquelle bzw. des Austritts aus einer Lichtleitfaser, sofern eine solche zur Zuführung der Laserstrahlung verwendet wird. Durch diese Anordnung wird somit eine Aufteilung des Strahls in zwei Laserpunkte bzw. Laserspots erreicht, einem, welcher durch die Linsenanordnung gebildet von dem Linsenfeld und der zweiten Linse in gewünschter Weise geformt wird, und einem Punkt, welcher in einer Abbildung der Lichtquelle bzw. des zugeführten Lichtstrahls besteht. Durch die Verlagerung der aus Linsenfeld und zweiter Linse gebildeten Baugruppe, wie sie vorangehend beschrieben wurde, kann die Leistungsaufteilung zwischen den beiden Laserpunkten und deren räumlichen Lage zueinander geändert werden.

In demjenigen Teil des Strahlenganges, dessen Querschnitt nicht von dem Linsenfeld und der zweiten Linse überdeckt wird, können weitere optische Elemente zur Erzeugung gewünschter Strahlgestaltungen angeordnet werden. So könnten in diesem Bereich weitere Linsen zur Strahlformung oder beispielsweise auch Keilanordnungen zum Aufteilen des Strahls in mehrere Laserspots angeordnet werden. Durch Kombination verschiedener strahlformender Elemente wie Linsen, gekreuzte Zylinderlinsenfelder, Keilplatten etc. lassen sich verschiedenste Spotgeometrien und Spotanzahlen erzeugen. Ferner lässt sich ein lateraler Versatz dieser Laserspots zueinander realisieren. Durch die erfindungsgemäße Ausgestaltung des Linsenfeldes und der nachfolgenden Einzellinse kann dabei durch Verschieben der Linsenanordnung in einer ersten Raumrichtung der laterale Versatz zwischen den Laserspots bzw. Laserpunkten verändert werden, während durch ein Verschieben in einer dazu senkrechten Richtung, senkrecht zur optischen Achse die Leistungsaufteilung zwischen den einzelnen Laserspots bzw. Laserpunkten verändert werden kann. Eine Positionsverschiebung kann durch die veränderte Lage der Scheitelpunkte einzelner Zylinderlinsen erreicht werden.

So sind das Linsenfeld und die zweite Linse bevorzugt derart ausgebildet und angeordnet, dass sie eine solche optische Baugruppe bilden, welche bei Verlagerung der optischen Baugruppe in der genannten ersten Richtung eine Änderung der Leistungsaufteilung zwischen zwei von der optischen Baugruppe erzeugten Laserpunkten bewirkt. Das heißt, so kann die Aufteilung der Leistung beispielsweise zwischen einem durch die Linsen geformten rechteckigen Laserpunkt und einem runden Laserpunkt, welcher beispielsweise in der Abbildung des Austrittes einer Lichtleitfaser besteht, verändert werden. Eine Verlagerung der optischen Baugruppe in der genannten zweiten Richtung bewirkt vorzugsweise eine Änderung der relativen Lage der beiden Laserpunkte zueinander, insbesondere eine laterale Veränderung der Position des durch das Linsenfeld und die zweite Linse geformten, vorzugsweise rechteckigen, Laserspots. In einer Ausgangslage können diese beiden Laserpunkte zur optischen Achse zentriert sein. Durch Verlagerung der genannten optischen Baugruppe kann der von der Linsenanordnung, gebildet aus Linsenfeld und zweiter Linse, geformte Laserspot, der z. B. quadratisch ausgebildet sein kann, quer zur optischen Achse verschoben werden, sodass der von dem die Linsenanordnung nicht durchlaufenden Lichtbündel gebildete, vorzugsweise runde Laserpunkt- bzw.- spot weiterhin zentriert zur optischen Achse ist. Der durch die Linsenanordnung aus dem anderen Teil des Strahlenbündels geformte, vorzugsweise rechteckige, Laserspot ist dann seitlich versetzt. Eine solche Ausgestaltung kann beispielsweise für das Schweißen oder Löten asymmetrisch ausgebildeter Werkstücke von Vorteil sein.

Das beschriebene Linsenfeld, welches aus den ersten Linsen gebildet ist, und die zweite Linse sind vorzugsweise so ausgestaltet und angeordnet, dass sie einen rechteckigen Laserpunkt bzw. einen Rechteckspot erzeugen. Dieser Rechteckspot ist vorzugsweise so ausgebildet, dass er in der Bearbeitungsebene eine größere Fläche überdeckt als ein zweiter, vorzugsweise runder Laserspot, welcher durch die Laserstrahlung erzeugt wird, welche nicht die aus Linsenfeld und zweiter Linse gebildete optische Baugruppe durchläuft.

Neben der vorangehend beschriebenen strahlformenden Laseroptik ist Gegenstand der Erfindung ein Lasersystem mit einer Laserlichtquelle, beispielsweise einer oder mehreren Laserdioden und einer strahlformenden Laseroptik, wie sie vorangehend beschrieben wurde. Insofern wird auf die vorangehende Beschreibung verwiesen. Zwischen der Laserlichtquelle und der Laseroptik kann bevorzugt eine Lichtleitfaser angeordnet sein, welche die Laserstrahlung von der Laserlichtquelle zu der Laseroptik führt. Besonders bevorzugt ist das Lasersystem als Bearbeitungssystem, weiter bevorzugt zum Schweißen und/oder Löten ausgebildet.

Nachfolgend wird die Erfindung beispielhaft anhand der beigefügten Figuren beschrieben. In diesen zeigt:
- Fig. 1: Schematisch ein erfindungsgemäßes Lasersystem mit einer strahlformenden Laseroptik gemäß der Erfindung,
- Fig. 2a, 2b, 2c: Schematische Schnittansichten der strahlformenden Laseroptik gemäß Fig. 1 mit drei verschiedenen Intensitätsverteilungen und
- Fig. 3a, 3b, 3c: Schnittansichten der strahlformenden Laseroptiken gemäß Fig. 1 und Fig. 2 mit drei unterschiedlichen Positionierungen zweier Laserspots.

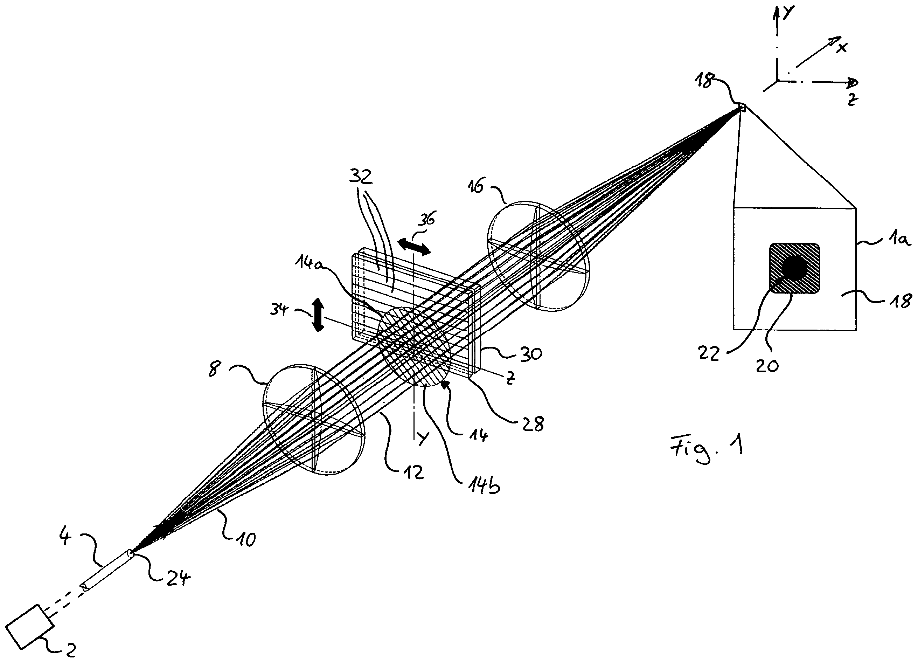

Fig. 1 zeigt schematisch ein Lasersystem zur Materialbearbeitung mit einer Laserlichtquelle 2 sowie einer sich austrittsseitig anschließenden Lichtleitfaser 4 austrittsseitig schließt sich an die Lichtleitfaser 4 eine strahlformende Laseroptik 6 an. Diese Laseroptik 6 weist auf ihrer Eingangsseite, das heißt, der Lichtleitfaser 4 zugewandt, eine Kollimatorlinse 8 auf, welche den aus der Lichtleitfaser 4 austretenden Strahl 10 aufweitet und austrittsseitig eine kollimierte Strahlung 12 bereitstellt. Die kollimierte Strahlung 12 weist einen Querschnitt bzw. eine Querschnittsform 14 rechtwinklig bzw. normal zur optischen Achse x, entlang derer sich die Strahlung ausbreitet, auf. Beabstandet zu der Kollimatorlinse 8 ist eine Fokussierlinse 16 angeordnet, welche den Laserstrahl fokussiert und in der Bearbeitungsebene 18 abbildet. Die Bearbeitungsebene 18 erstreckt sich quer und insbesondere rechtwinklig zur optischen Achse x.

In Fig. 1 ist in dem Ausschnitt 1a vergrößert die Strahl- bzw. Spotgeometrie dargestellt, welche in der Bearbeitungsebene 18 erreicht wird. In diesem Fall wird ein erster rechteckiger Spot 20 sowie ein zweiter runder Spot 22 erzeugt und einander überlagert. Die Überlagerung ist hier so, dass der erste Spot 20 mit dem zweiten Spot 22 entlang der optischen Achse x zentriert ist. Der zweite Spot 22 stellt im Wesentlichen eine Abbildung des Endes 24 der Lichtleitfaser 4 dar. Der rechteckige bzw. in diesem Fall quadratische erste Spot 20 wird durch eine strahlformende optische Baugruppe 26 erzeugt, welche in dem Bereich der kollimierten Strahlung 12, das heißt, zwischen der Kollimatorlinse 8 und der Fokussierlinse 16 angeordnet ist. Die optische Baugruppe 26 ist so angeordnet, dass sie lediglich einen Teil 14a des Querschnittes 14 überdeckt, während ein zweiter Teil 14b des Querschnittes 14 nicht von der Baugruppe 26 überdeckt wird. In dem zweiten Bereich 14b passiert die kollimierte Strahlung 12 zwischen der Kollimatorlinse 8 und der Fokussierlinse 16 die optische Baugruppe 26 seitlich, ohne von dieser beeinflusst zu werden. Der den zweiten Abschnitt 14b bildende Teil der Strahlung bildet den zweiten Spot 22 aus. Durch Änderung des Verhältnisses der Abschnitte 14a und 14b kann die Intensität zwischen dem ersten Spot 20 und dem zweiten Spot 22 verschoben bzw. verändert werden.

Die optische Baugruppe 26 ist gebildet aus einem Linsenfeld 28 und einer in Richtung der optischen Achse x nachgelagerten Einzellinse 30. Das Linsenfeld 28 ist eine Anordnung einer Mehrzahl von nebeneinanderliegenden Zylinderlinsen 32. Die Zylinderlinsen 32 sind alle identisch ausgebildet und erstrecken sich mit ihren Längsachsen, um welche herum sie gekrümmt sind, parallel zu der Richtung z normal zur optischen Achse x. Durch diese Anordnung erreichen die Zylinderlinsen 32 gemeinsam eine Strahlformung in Richtung der ersten Richtung y normal zur optischen Achse x und rechtwinklig zur zweiten Richtung z, parallel zu welcher sich die Längsachsen der Zylinderlinsen 32 erstrecken. Die Einzellinse 30 ist ebenfalls als Zylinderlinse ausgebildet, ihre Längsachse verläuft jedoch parallel zu der ersten Richtung y und damit normal zu der Erstreckungsrichtung der Längsachsen der Zylinderlinsen 32. Auf diese Weise erreicht die Einzellinse 30 eine Strahlformung in der zweiten Richtung z, sodass durch Überlagerung bzw. Hintereinanderschaltung des Linsenfeldes 28 und der Einzellinse 30 insgesamt die rechteckige bzw. quadratische Strahlform des ersten Spots 20 ausgebildet werden kann. Dazu weiten die Zylinderlinsen 32 den Strahl bzw. den durch den ersten Abschnitt 14a verlaufenden Teilstrahl in einer ersten Richtung y linienförmig auf. Die Einzellinse 32 weitet den Strahl in der zweiten Richtung z quer zu der Aufweitung durch die Einzellinsen 30 auf. Die Einzellinse 30 und das Linsenfeld 28 sind fest zueinander angeordnet und gemeinsam bewegbar, wie nachfolgend beschrieben wird.

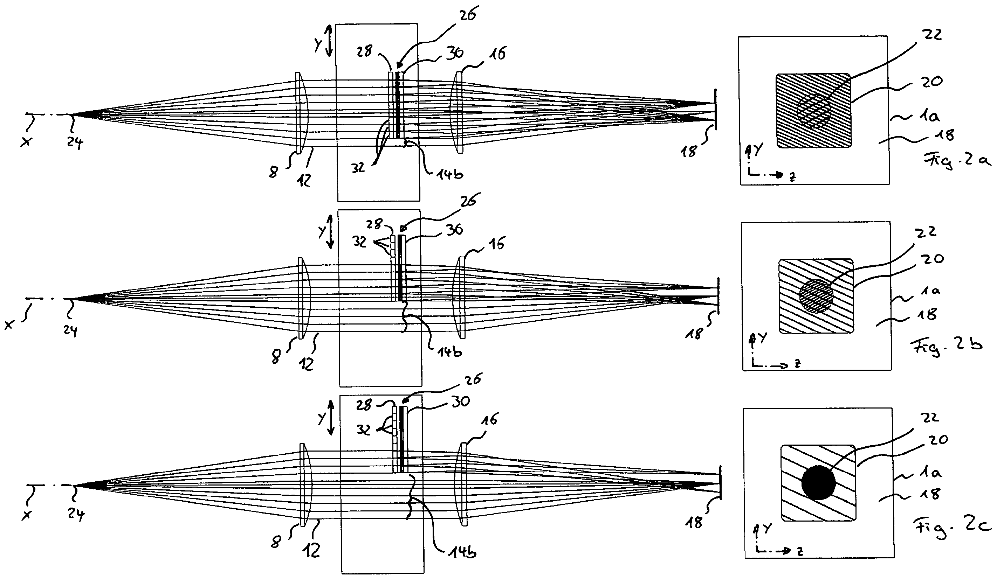

Um die optische Baugruppe 26 bewegen zu können, sind zwei voneinander unabhängige Verstelleinrichtungen 34 und 36 vorhanden, welche in Fig. 1 lediglich schematisch dargestellt sind. Über die Verstelleinrichtung 34 kann die gesamte optische Baugruppe 26 entlang der ersten Richtung y normal zu der optischen Achse x verschoben werden. Durch die Verstelleinrichtung 36 kann eine Verlagerung in dazu senkrechter Richtung, das heißt, in Richtung der zweiten Richtung z normal zur optischen Achse x erreicht werden. Durch die Verstelleinrichtung 34 wird durch die Verlagerung der optischen Baugruppe 26 in der ersten Richtung y die optische Baugruppe 26 unterschiedlich weit mit dem Querschnitt 14 der kollimierten Strahlung 12 zur Überdeckung gebracht. Das heißt, durch diese Bewegung kann das Verhältnis des ersten Abschnittes 14a und des zweiten Abschnittes 14b der kollimierten Strahlung 12 zueinander verändert werden. Auf diese Weise wird das Intensitätsverhältnis zwischen dem ersten Spot 20 und dem zweiten Spot 22 geändert, wie anhand der Fig. 2a bis Fig. 2c gezeigt ist.

Die Fig. 2a bis Fig. 2c zeigen drei unterschiedliche Positionierungen in Richtung y, welche durch die Verstelleinrichtung 34 hervorgerufen werden können. Neben der Schnittansicht ist in den Fig. 2a bis Fig. 2c noch eine Darstellung entsprechend dem vergrößerten Ausschnitt 1a in Fig. 1, das heißt, eine Draufsicht auf die Bearbeitungsebene 18 in Richtung der optischen Achse x gezeigt. In Fig. 2a ist die optische Baugruppe 28 so positioniert, dass sie einen großen Teil des Querschnittes 14 der kollimierten Strahlung 12 überdeckt. So verläuft nur ein kleiner Teil der Strahlung 12 an der optischen Baugruppe 26 vorbei. Dies führt dazu, dass der erste Laserpunkt bzw. Spot 20 im Verhältnis zu dem zweiten Laserpunkt bzw. des zweiten Spots 22 eine hohe Intensität aufweist. In Fig. 2b ist eine Positionierung gezeigt, bei welcher die optische Baugruppe 26 weiter aus der kollimierten Strahlung 12 herausbewegt worden ist, sodass ein größerer Teil der Strahlung 12 an der optischen Baugruppe 26 vorbeiverläuft, ohne von dieser beeinflusst zu werden. Das heißt, der Abschnitt 14b des Querschnittes 14 der kollimierten Strahlung 12 wird größer. Dies führt dazu, dass im Vergleich zu Fig. 2a die Intensität des ersten Spots 20 abnimmt und die Intensität des zweiten Spots 22 zunimmt. In der Anordnung gemäß Fig. 2c ist die optische Baugruppe 26 noch weiter aus dem Querschnitt des Strahlenganges 12 herausbewegt, sodass die Intensität des zweiten Spots 22 noch einmal erhöht ist und die Intensität des ersten Spots 20 weiter verringert ist.

Wie anhand der Fig. 2a bis Fig. 2c zu erkennen ist, führt die Verlagerung der optischen Baugruppe 26 in der ersten Richtung y lediglich zu einer Änderung der Intensitätsverteilung zwischen dem ersten Spot 20 und dem zweiten Spot 22, während die geometrische Positionierung der beiden Spots 20 und 22 gleich bleibt, das heißt, in diesem Fall bleiben beide Spots 20, 22 in der y-z-Ebene bezüglich der optischen Achse x zentriert.

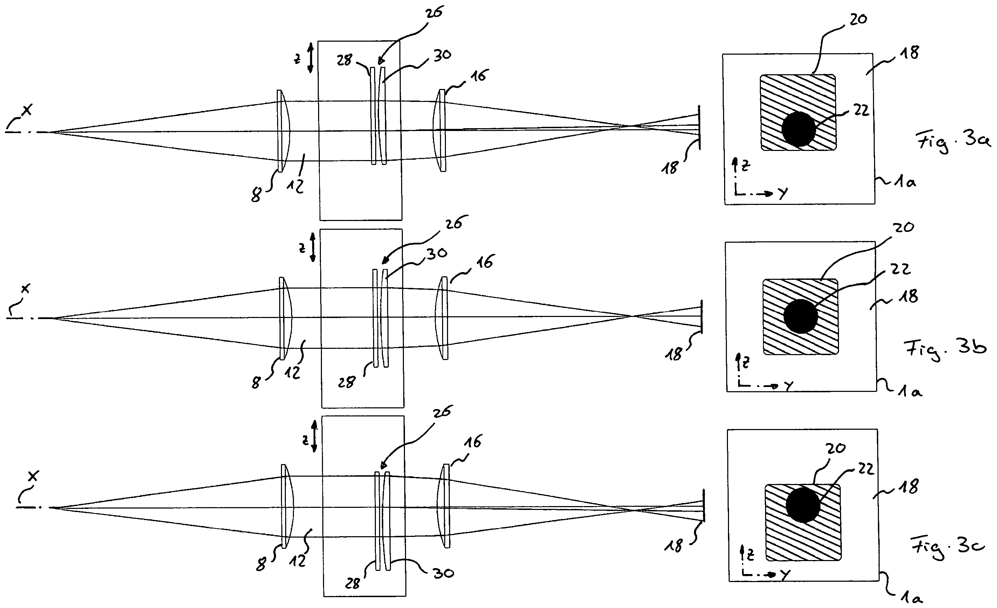

Durch eine Bewegung in der zweiten Richtung z mit Hilfe der Verstelleinrichtung 36 kann nun eine Verlagerung der Spots 20 und 22 relativ zueinander erreicht werden, wie anhand der Fig. 3a bis Fig. 3c beschrieben wird. Fig. 3b zeigt eine Positionierung, bei welcher die optische Baugruppe 26, bestehend aus dem Linsenfeld 28 und der Einzellinse 30, bezüglich der optischen Achse x mittig bzw. zentriert angeordnet sind. In dieser Position sind der erste Spot 20 und der zweite Spot 22 ebenfalls bezüglich der optischen Achse x zentriert, wie es auch in den Beispielen in Fig. 1 (Ausschnitt 1a) sowie Fig. 2a bis Fig. 2c in den Draufsichten auf die Bearbeitungsebene 18 gezeigt ist. Wenn ausgehend aus dieser Mittellage die optische Baugruppe 26 wie in Fig. 3a gezeigt ist, in der zweiten Richtung z verschoben wird (in Fig. 3a nach oben), wird auch der erste Spot 20 bezüglich des zweiten Spots 22 entsprechend verschoben. Bei Verschiebung in umgekehrter Richtung, welche in Fig. 3c gezeigt ist (Verschiebung nach unten), verschiebt sich der erste Spot 20 entsprechend in umgekehrter Richtung quer zur optischen Achse x. Der zweite Spot 22 verbleibt stets gegenüber der optischen Achse x zentriert.

In dem in Fig. 3a bis Fig. 3c gezeigten Beispiel ist die Verlagerung der optischen Baugruppe 26 in der ersten Richtung y unverändert, sodass die Intensitätsverteilung zwischen dem ersten Spot 20 und dem zweiten Spot 22 nicht geändert ist. Es ist jedoch zu verstehen, dass die Lageänderungen, welche anhand der Fig. 2 und Fig. 3 beschrieben wurden, auch gleichzeitig stattfinden bzw. überlagert werden können. So wird ein System geschaffen, bei welchem sich sehr flexibel die Intensitätsverteilung zwischen den zwei Spots 20 und 22 ändern lässt und sich darüber hinaus der Spot 20 relativ zu dem Spot 22 in seiner Position verändern lässt. Dies ist insbesondere für das Schweißen oder Löten asymmetrischer Werkstücke von Vorteil.

### Bezugszeichenliste

- 2: Laserlichtquelle
- 4: Lichtleitfaser
- 6: Laseroptik
- 8: Kollimatorlinse
- 10: Laserstrahl
- 12: Kollimierte Strahlung
- 14: Querschnitt der kollimierten Strahlung
- 14a: Erster Abschnitt des Querschnittes
- 14b: Zweiter Abschnitt des Querschnittes
- 16: Fokussierlinse
- 18: Bearbeitungsebene
- 20: Erster Spot
- 22: Zweiter Spot
- 24: Ende der Lichtleitfaser
- 26: Optische Baugruppe
- 28: Linsenfeld
- 30: Einzellinse
- 32: Zylinderlinsen
- 34, 36: Verstelleinrichtungen
- x: Optische Achse
- y: Erste Richtung
- z: Zweite Richtung
- 1a: Vergrößerter Ausschnitt der Bearbeitungsebene 18

## Patentansprüche

1. Strahlformende Laseroptik mit einem Linsenfeld (28), welches eine Mehrzahl erster Linsen (32) aufweist, welche derart ausgebildet und nebeneinander angeordnet sind, dass sie eine Strahlformung in einer ersten Richtung (y) normal zu einer optischen Achse (x) bewirken, sowie einer einzelnen zweiten Linse (30), welche derart ausgebildet ist, dass sie eine Strahlformung in einer zweiten Richtung (z )normal zu der optischen Achse (x) sowie der ersten Richtung (y) bewirkt, wobei
der Anordnung aus Linsenfeld (28) und zweiter Linse zumindest eine Linse (8) oder Linsengruppe vorgelagert ist, welche die Strahlung kollimiert, so dass das Linsenfeld (28) und die zweite Linse (30) in einem Bereich kollimierter Strahlung (12) angeordnet sind,
im Strahlengang hinter dem Linsenfeld (28) und der zweiten Linse (30) zumindest eine Fokussierlinse (16) angeordnet ist,
und das Linsenfeld (28) und die zweite Linse in einem Strahlengang (12) entlang der optischen Achse (x) hintereinander und derart angeordnet sind, dass sie in einer Querrichtung normal zur optischen Achse (x) den Strahlengang (12) nur teilweise überdecken.

2. Strahlformende Laseroptik nach Anspruch 1, bei welcher die ersten Linsen Zylinderlinsen (32) sind, welche vorzugsweise identisch ausgebildet sind.

3. Strahlformende Laseroptik nach Anspruch 2, bei welcher sich die Längsachsen der Zylinderlinsen (32) parallel zueinander und bevorzugt parallel zu der zweiten Richtung (z) normal zu der optischen Achse (x) erstrecken.

4. Strahlformende Laseroptik nach einem der vorangehenden Ansprüche, bei welcher die zweite Linse (30) eine Zylinderlinse ist, deren Längsachse sich vorzugsweise in der ersten Richtung (y) normal zu der optischen Achse (x) erstreckt.

5. Strahlformende Laseroptik nach einem der vorangehenden Ansprüche, **dadurch gekennzeichnet, dass** die zweite Linse (30) in der ersten Richtung (y) eine Ausdehnung aufweist, welche zumindest der Ausdehnung des Linsenfeldes (28) in dieser ersten Richtung (y) entspricht.

6. Strahlformende Laseroptik nach einem der vorangehenden Ansprüche, bei welcher die zweite Linse (30) eine Streulinse ist.

7. Strahlformende Laseroptik nach einem der vorangehenden Ansprüche, bei welcher die zweite Linse (30) eine größere Brennweite als die ersten Linsen (32) des Linsenfeldes (28) aufweist.

8. Strahlformende Laseroptik nach einem der vorangehenden Ansprüche, bei welcher das Linsenfeld (28) und die zweite Linse (30) eine optische Baugruppe (26) bilden, welche als Ganzes in der ersten Richtung (y) und/oder in der zweiten Richtung (z) normal zu der optischen Achse (x) bewegbar ist.

9. Strahlformende Laseroptik nach Anspruch 8, bei welcher die optische Baugruppe (26) relativ zu der Fokussierlinse (16) in der ersten Richtung (y) und/oder in der zweiten Richtung (z) normal zu der optischen Achse (x) bewegbar ist.

10. Strahlformende Laseroptik nach einem der vorangehenden Ansprüche, bei welcher das Linsenfeld (28) und die zweite Linse (30) in dem Strahlengang derart angeordnet sind, dass sie in der ersten Richtung (y) den Strahlengang (12) nur teilweise überdecken.

11. Strahlformende Laseroptik nach Anspruch 10, bei welcher das Linsenfeld (28) und die zweite Linse (30) eine derartige optische Baugruppe (26) bilden, dass eine Verlagerung dieser optischen Baugruppe (26) in der ersten Richtung (y) eine Änderung der Intensitätsverteilung zwischen zwei von der optischen Baugruppe (26) erzeugten Laserpunkten (20, 22) bewirkt und eine Verlagerung dieser optischen Baugruppe (26) in der zweiten Richtung (z) eine Änderung der relativen Lage der beiden Laserpunkte (20, 22) zueinander bewirkt.

12. Strahlformende Laseroptik nach einem der vorangehenden Ansprüche, bei welcher das Linsenfeld (28) und die zweite Linse (30) so ausgestaltet und angeordnet sind, dass sie einen Rechteckspot (20) erzeugen.

13. Lasersystem mit einer Laserlichtquelle (2) und einer strahlformenden Laseroptik (6) nach einem der vorangehenden Ansprüche, bei welchem zwischen der Laserlichtquelle (2) und der Laseroptik (6) vorzugsweise eine Lichtleitfaser (4) angeordnet ist.

14. Lasersystem nach Anspruch 13, welches als Bearbeitungssystem, bevorzugt zum Schweißen oder Löten ausgebildet ist.

## Claims

1. A beam-shaping laser optics with a lens field (28) which comprises a plurality of first lenses (32), which are arranged next to one another and designed in such that they effect beam-shaping in a first direction (y) normal to an optical axis (x), and an individual second lens (30), which is designed such that it effects beam-shaping in a second direction (z) normal to the optical axis (x) and the first direction (y), wherein
at least one lens (8) or lens group, which collimates the radiation, is positioned upstream of the arrangement of the lens field (28) and the second lens, in such a way that the lens field (28) and the second lens (30) are arranged in a region of a collimated radiation (12),
at least one focusing lens (16) is arranged in the beam path behind the lens field (28) and the second lens (30),
and the lens field (28) and the second lens are arranged behind one another in the beam path (12) along the optical axis (x) in such a way that they only partially overlap the beam path (12) in a transverse direction normal to the optical axis (x).

2. The beam-shaping laser optics according to claim 1, in which the first lenses are cylindrical lenses (32) which are preferably designed identically.

3. The beam-shaping laser optics according to claim 2, in which the longitudinal axes of the cylindrical lenses (32) extend parallel to one another and preferably parallel to the second direction (z) normal to the optical axis (x).

4. The beam-shaping laser optics according to any one of the preceding claims, in which the second lens (30) is a cylindrical lens, the longitudinal axis of which preferably extends in the first direction (y) normal to the optical axis (x).

5. The beam-shaping laser optics according to any one of the preceding claims, **characterised in that** the second lens (30) has an extension in the first direction (y) which corresponds at least to the extension of the lens field (28) in this first direction (y).

6. The beam-shaping laser optics according to any one of the preceding claims, in which the second lens (30) is a scattering lens.

7. The beam-shaping laser optics according to any one of the preceding claims, in which the second lens (30) has a greater focal length than the first lenses (32) of the lens field (28).

8. The beam-shaping laser optics according to any one of the preceding claims, in which the lens field (28) and the second lens (30) form an optical assembly (26), which can be moved as a whole in the first direction (y) and/or in the second direction (z) normal to the optical axis (x).

9. The beam-shaping laser optics according to claim 8, in which the optical assembly (26) is movable relative to the focusing lens (16) in the first direction (y) and/or the second direction (z) normal to the optical axis (x).

10. The beam-shaping laser optics according to any one of the preceding claims, in which the lens field (28) and the second lens (30) are arranged in the beam path, in such a way that they only partially overlap the beam path (12) in the first direction (y).

11. The beam-shaping laser optics according to claim 10, in which the lens field (28) and the second lens (30) form an optical assembly (26), which is such that a displacement of this optical assembly (26) in the first direction (y) effects a change in the intensity distribution between two of the laser points (20, 22) generated by the optical assembly (26) and a displacement of this optical assembly (26) in the second direction (z) effects a change of the relative position of the two laser points (20, 22) with respect to one another.

12. The beam-shaping laser optics according to any one of the preceding claims, in which the lens field (28) and the second lens (30) are designed and arranged such that they produce a rectangular spot (20)

13. A laser system with a laser light source (2) and beam-shaping laser optics (6) according to any one of the preceding claims, in which an optical fibre (4) is preferably arranged between the laser light source (2) and the laser optics (6).

14. The laser system according to claim 13, which is designed as a processing system, preferably for welding or soldering.

## Revendications

1. Optique à laser formant des faisceaux, pourvue d'un réseau de lentilles (28), lequel comporte une pluralité de premières lentilles (32), lesquelles sont conçues et placées côte à côte de sorte à provoquer une formation d'un faisceau dans une première direction (y) à la normale d'un axe optique (x), ainsi qu'une unique deuxième lentille (30), laquelle est conçue de sorte à provoquer une formation d'un faisceau dans une deuxième direction (z), à la normale de l'axe optique (x), ainsi que de la première direction (y),
en amont de l'ensemble constitué du réseau de lentilles (28) et de la deuxième lentille étant placé(e) au moins une lentille (8) ou un groupe de lentilles, qui collimate le rayonnement, de telle sorte que le réseau de lentilles (28) et la deuxième lentille (30) soient placés dans une zone de rayonnement (12) collimaté,
dans le trajet du faisceau derrière le réseau de lentilles (28) et la deuxième lentille (30) étant placée au moins une lentille de focalisation (16)
et le réseau de lentilles (28) et la deuxième lentille étant placés les uns derrières les autres dans un trajet du faisceau (12), le long de l'axe optique (x) et de telle sorte que dans une direction transversale à la normale de l'axe optique (x), ils ne recouvrent que partiellement le trajet du faisceau (12).

2. Optique à laser formant des faisceaux 1, dans laquelle les premières lentilles sont des lentilles cylindriques (32), qui sont conçues de préférence à l'identique.

3. Optique à laser formant des faisceaux selon la revendication 2, dans laquelle les axes longitudinaux des lentilles cylindriques (32) s'étendent à la parallèle les uns des autres et de préférence à la parallèle de la deuxième direction (z) à la normale de l'axe optique (x).

4. Optique à laser formant des faisceaux selon l'une quelconque des revendications précédentes, dans laquelle la deuxième lentille (30) est une lentille cylindrique, dont l'axe longitudinal s'étend de préférence dans la première direction (y) à la normale de l'axe optique (x).

5. Optique à laser formant des faisceaux selon l'une quelconque des revendications précédentes, **caractérisée en ce que** la deuxième lentille (30) présente dans la première direction (y) une extension, laquelle correspond au moins à l'extension du réseau de lentilles (28) dans ladite première direction (y).

6. Optique à laser formant des faisceaux selon l'une quelconque des revendications précédentes, dans laquelle la deuxième lentille (30) est une lentille diffusante.

7. Optique à laser formant des faisceaux selon l'une quelconque des revendications précédentes, dans laquelle la deuxième lentille (30) présente une distance focale supérieure à celle des premières lentilles (32) du réseau de lentilles (28).

8. Optique à laser formant des faisceaux selon l'une quelconque des revendications précédentes, dans laquelle le réseau de lentilles (28) et la deuxième lentille (30) constituent un ensemble optique (26) lequel est déplaçable en tant qu'entité dans la première direction (y) et / ou dans la deuxième direction (z) à la normale de l'axe optique (x).

9. Optique à laser formant des faisceaux selon la revendication 8, dans laquelle l'ensemble optique (26) est déplaçable par rapport à la lentille de focalisation (16) dans la première direction (y) et / ou dans la deuxième direction (z) à la normale de l'axe optique (x).

10. Optique à laser formant des faisceaux selon l'une quelconque des revendications précédentes, dans laquelle le réseau de lentilles (28) et la deuxième lentille (30) sont placés dans le trajet du faisceau, de sorte à ne recouvrir que partiellement le trajet du faisceau (12) dans la première direction (y).

11. Optique à laser formant des faisceaux selon la revendication 10, dans laquelle le réseau de lentilles (28) et la deuxième lentille (30) constituent un ensemble optique (26) de type tel qu'une délocalisation dudit ensemble optique (26) dans la première direction (y) provoque une modification de la distribution d'intensité entre deux points laser (20, 22) générés par l'ensemble optique (26) et qu'une délocalisation dudit ensemble optique (26) dans la deuxième direction (z) provoque une modification de la position relative mutuelle des deux points laser (20, 22).

12. Optique à laser formant des faisceaux selon l'une quelconque des revendications précédentes, dans laquelle le réseau de lentilles (28) et la deuxième lentille (30) sont conçus et placés de sorte à générer un spot rectangulaire (20).

13. Système laser pourvu d'une source lumineuse au laser (2) et d'une optique à laser formant des faisceaux (6) selon l'une quelconque des revendications précédentes, dans lequel entre la source lumineuse au laser (2) et l'optique à laser (6) est placée de préférence une fibre optique (4).

14. Système laser selon la revendication 13, lequel est conçu sous la forme d'un système d'usinage, destiné de préférence à souder ou à braser.
